(19) Europäisches Patentamt
European Patent Office
Office européen des brevets

(11) **EP 2 492 545 A1**

(12) **EUROPEAN PATENT APPLICATION**
published in accordance with Art. 153(4) EPC

(43) Date of publication:
**29.08.2012 Bulletin 2012/35**

(21) Application number: **10824862.6**

(22) Date of filing: **15.10.2010**

(51) Int Cl.:
*F16H 19/00* (2006.01)    *B25J 17/00* (2006.01)
*F16G 1/28* (2006.01)    *F16G 5/20* (2006.01)
*F16H 7/02* (2006.01)    *F16H 7/06* (2006.01)

(86) International application number:
**PCT/JP2010/068138**

(87) International publication number:
**WO 2011/049013 (28.04.2011 Gazette 2011/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2009 JP 2009240757**

(71) Applicant: **Kabushiki Kaisha Yaskawa Denki
Kitakyushu-shi, Fukuoka 806-0004 (JP)**

(72) Inventor: **MAMBA, Takashi
Kitakyushu-shi
Fukuoka 806-0004 (JP)**

(74) Representative: **Viering, Jentschura & Partner
Grillparzerstrasse 14
81675 München (DE)**

(54) **TRANSMISSION MECHANISM FOR NONPARALLEL AXES, AND ROBOT**

(57)    A mechanism is realized that is capable of transmitting power between nonparallel axes, that is lightweight, that minimizes backlashes, and that is highly durable. A robot is also realized that includes an intersecting-axes differential mechanism that is light-weight, that minimizes backlashes, and that is highly durable.

A plurality of conical pulleys and a fan shaped belt are used. The plurality of conical pulleys are arranged such that their imaginary conical surfaces have their apexes match each other, and that the imaginary conical surfaces are in contact with each other. This is used as the intersecting-axes differential mechanism, which constitutes the robot.

**FIG. 1A**    **FIG. 1B**

**FIG. 1C**

**EP 2 492 545 A1**

**Description**

FIELD OF THE INVENTION

The present invention relates to a nonparallel-axes belt transmission mechanism that transmits power between nonparallel axes such as intersecting axes through a belt, and relates to a robot utilizing the nonparallel-axes belt transmission mechanism.

DISCUSSION OF THE BACKGROUND

Nonparallel-axes transmission mechanisms transmit power between nonparallel axes and are employed in many kinds of machines such as at joints of robots. Intersecting-axes transmission mechanisms are among the most frequently used nonparallel-axes belt transmission mechanisms. Some intersecting-axes transmission mechanisms are used in differential forms.

Bevel gears are among the most popular nonparallel-axes transmission mechanisms. Generally, bevel gears involve large backlashes due to the need for ensuring some degree of clearance for minimized friction. Bevel gears also need highly rigid materials to avoid chipping on teeth, resulting in heaviness in weight. In an attempt to address these technical circumstances, patent document 1 discloses a nonparallel-axes transmission mechanism that uses wires.

Wires transmit power only in their directions of pull. In view of this, patent document 1 discloses a pair of stepped pulleys of intersecting rotation axes, with wires wound on the pulleys in opposite directions so as to provide bi-directional rotary transmission. Some other nonparallel-axes transmission mechanisms use belts (see, for example, non-patent document 1).

Related Art Documents

Patent Documents

Patent document 1: Japanese Unexamined Patent Application Publication No. 3-505067.
Non-patent document 1: Ito, Shigeru. Dictionary of Mechanisms, Rikogakusha Publishing Co., Ltd., May 10, 1983, pp. 108-112.

Problems to be Solved by the Invention

Unfortunately, conventional nonparallel-axes transmission mechanisms using wires involve much load to be placed on wires, and for wire reliability reasons, have had little use in industrial applications, similarly to other general mechanisms using wires. Additionally, conventional nonparallel-axes transmission mechanisms using wires need to fix the ends of the wires to the respective pulleys, and each wire overlaps itself in one full rotation of each pulley. Thus, the conventional nonparallel-axes transmission mechanisms have had their ranges of movement limited to one full rotation.

The present invention has been made in view of the above-described circumstances, and it is an object of the present invention to provide a nonparallel-axes belt transmission mechanism that has high durability, that transmits power between intersecting axes without limitation to the range of movement, and that also finds applications in differential mechanisms.

Summary of the Invention

In order to realize the object, the present invention has the following configurations. In claim 1, a nonparallel-axes transmission mechanism includes a plurality of pulleys, support shafts, and a transmission medium. The support shafts rotatably support the plurality of respective pulleys. The transmission medium is configured to, when power is input to one pulley among the plurality of pulleys, transmit the power from the one pulley to another pulley among the plurality of pulleys. The other pulley includes a rotation axis not parallel to a rotation axis of the one pulley. The transmission medium includes a fan belt including a fan shape in a developed plan view. The plurality of pulleys each include a conical pulley including a shape of an imaginary conical surface removing a shape of the fan belt in contact with the imaginary conical surface. The conical pulley includes a rotation axis identical to a center line of a cone formed by the imaginary conical surface. Among a plurality of conical pulleys of the plurality of pulleys, at least two conical pulleys include imaginary conical surfaces including matching apexes.

In the nonparallel-axes transmission mechanism recited in claim 2, at least two conical pulleys among the plurality of conical pulleys include imaginary conical surfaces in contact with one another with a contact line between the imaginary conical surfaces. One surface of the fan belt is in contact with one conical pulley among the two contacting conical pulleys, and across the contact line, another surface of the fan belt opposite the one surface is in contact with another conical pulley among the two contacting conical pulleys.

In the nonparallel-axes transmission mechanism recited in claim 3, the fan belt includes a V belt including at least one protrusion including at least one of a V shaped cross-section and a trapezoidal cross-section. The conical pulley includes a groove corresponding to the at least one protrusion.

In the nonparallel-axes transmission mechanism recited in claim 4, the at least one protrusion of the fan belt including at least one of a V shaped cross-section and a trapezoidal cross-section is asymmetrical such that an angle defined between a surface of the protrusion facing a center of the fan shape of the fan belt and a belt surface of the fan belt is smaller than an angle defined between a surface of the protrusion facing an outer circumference of the fan shape and the belt surface of the fan belt.

In the nonparallel-axes transmission mechanism recited in claim 5, the fan belt includes a timing belt including a plurality of tooth shaped protrusions aligned in a direction in which the fan belt proceeds. The conical pulley includes a timing pulley including grooves corresponding to the tooth shaped protrusions.

In the nonparallel-axes transmission mechanism recited in claim 6, the tooth shaped protrusions of the timing belt of the fan belt each include a wedge shaped protrusion including an incremental width toward an outer circumference of the fan shape of the fan belt. The conical pulley includes grooves corresponding to wedge shaped protrusions.

In the nonparallel-axes transmission mechanism recited in claim 7, the plurality of conical pulleys include a first conical pulley and a second conical pulley. The fan belt includes at least one both-end-secured belt including one end secured to the first conical pulley and another end secured to the second conical pulley.

In the nonparallel-axes transmission mechanism recited in claim 8, the plurality of conical pulleys include a conical pulley A and a conical pulley B abutting on the conical pulley A. The conical pulley A and the conical pulley B include imaginary conical surfaces in contact with one another with an imaginary conical contact line between the imaginary conical surfaces. The at least one both-end-secured belt includes two both-end-secured belts. One both-end-secured belt among the two both-end-secured belts is wound around the conical pulley A in a clockwise direction relative to an apex of the imaginary conical surface of the conical pulley A, and across the imaginary conical contact line, is wound around the conical pulley B in a counterclockwise direction relative to an apex of the imaginary conical surface of the conical pulley B. Another both-end-secured belt among the two both-end-secured belts is wound around the conical pulley A in a counterclockwise direction relative to the apex of the imaginary conical surface of the conical pulley A, and across the imaginary conical contact line, is wound around the conical pulley B in a clockwise direction relative to the apex of the imaginary conical surface of the conical pulley B.

In the nonparallel-axes transmission mechanism recited in claim 9, the fan belt includes a fan loop belt with both ends coupled to one another to form a loop.

In the nonparallel-axes transmission mechanism recited in claim 10, the plurality of pulleys include n main conical pulleys (n being an integer equal to or more than one) and 2(n-1) guide conical pulleys. The main conical pulleys and the guide conical pulleys include imaginary conical surfaces including matching apexes. The main conical pulleys are aligned with each other. Two guide conical pulleys among the guide conical pulleys are disposed between two abutting main conical pulleys among the aligned main conical pulleys. The fan loop belt includes an inner surface in contact with the main conical pulleys and an outer surface in contact with the guide conical pulleys.

In the nonparallel-axes transmission mechanism recited in claim 11, the plurality of pulleys include n main conical pulleys (n being an integer equal to or more than one) and 2n guide conical pulleys. The main conical pulleys and the guide conical pulleys include imaginary conical surfaces including matching apexes. The main conical pulleys are coupled to each other to form a loop. Two guide conical pulleys among the guide conical pulleys are disposed between two abutting main conical pulleys among the looped main conical pulleys. The fan loop belt includes an inner surface in contact with the main conical pulleys and an outer surface in contact with the guide conical pulleys.

In the nonparallel-axes transmission mechanism recited in claim 12, the plurality of pulleys include two input conical pulleys, n main conical pulley (n being an integer equal to or more than one), and 4n guide conical pulleys. The input conical pulleys, the main conical pulley, and the guide conical pulleys include imaginary conical surfaces including matching apexes. The two input conical pulleys include rotation axes aligned on a common line.

The main conical pulley includes a rotation axis orthogonal to the rotation axes of the input conical pulleys. Four guide conical pulleys among the guide conical pulleys are in contact with one main conical pulley among the main conical pulley. Two of the four guide conical pulleys are in contact with one input conical pulley among the two input conical pulleys. Another two of the four guide conical pulleys are in contact with another input conical pulley among the two input conical pulleys.

In the nonparallel-axes transmission mechanism recited in claim 13, the main conical pulleys each include a timing pulley including a pitch of tooth grooves. The imaginary conical surface of each of the guide conical pulleys includes a truncated cone bottom radius that is set such that the fan belt forms a development center angle that is an integral multiple of the pitch of the tooth grooves of the main conical pulley.

In the nonparallel-axes transmission mechanism recited in claim 14, the nonparallel-axes transmission mechanism further includes support frames. The support frames secure support shafts supporting the guide conical pulleys and secure support shafts supporting an output pulley. The support frames are rotatably supported about the rotation axes of the two input conical pulleys.

In the nonparallel-axes transmission mechanism recited in claim 15, the nonparallel-axes transmission mechanism further includes at least one supporting member supporting the fan belt through sliding contact. The at least one supporting member includes a conical supporting member including a shape of an imaginary conical surface removing a shape of the fan belt in contact with the imaginary conical surface. The at least one conical pulley among the plurality of conical pulleys includes an imaginary conical surface including an apex that matches an apex of the imaginary conical surface of the conical supporting member. The imaginary conical surface of the conical supporting member and the imaginary conical surface of the at least one conical pulley are in contact with one another with a contact line between the imaginary conical surface of the conical supporting member and the imaginary conical surface of the at least one conical pulley. The one surface of the fan belt is in contact with the at least one conical pulley, and across the contact line, another surface of the fan belt opposite the one surface is in contact with the conical supporting member.

In claim 21, a robot includes a plurality of arms and a joint. The joint pivotably or rotatably couples the plurality of arms to each other. The joint includes the nonparallel-axes transmission mechanism according to claim 1.

Effects of the Invention

With the invention recited in claims 1 and 21, power is transmitted between nonparallel axes without twisting the belt. The use of a belt reduces the material weight as compared with the use of bevel gears, and ensures a light-weight mechanism with minimized backlashes during power transmission. The use of a belt also improves durability as compared with the use of wire transmission mechanisms.

With the invention recited in claim 2, the pulleys are not spaced apart from each other, resulting in a downsized mechanism. With the invention recited in claim 3, power is transmitted without the belt going into a skid in the direction of the apex of the cone.

With the invention recited in claim 4, an approximately vertical surface is obtained, and this receives the force acting in the direction of the apex of the cone. This makes the belt difficult to fall off and makes the protrusions of the belt less deformable. This, in turn, ensures use of smaller protrusions, makes the belt bendable, and improves the durability of the belt.

With the invention recited in claim 5, power, no matter how strong, is transmitted without a skid.

With the invention recited in claim 6, power is transmitted without the belt going into a skid in the direction of the apex of the cone.

With the invention recited in claim 7, power is transmitted between pulleys of nonparallel axes with a simple mechanism that eliminates guide pulleys or other pulleys.

With the invention recited in claim 8, power is transmitted between abutting pulleys of nonparallel axes with a simple mechanism that eliminates guide pulleys or other pulleys.

With the invention recited in claim 9, bidirectional rotary power is transmitted incessantly between pulleys of nonparallel axes.

With the invention recited in claim 10, bidirectional rotary power is transmitted incessantly between a plurality of abutting pulleys coupled to each other and having nonparallel rotation axes.

With the invention recited in claim 11, bidirectional rotary power is transmitted incessantly between a plurality of abutting pulleys coupled to each other to form a loop and having nonparallel rotation axes.

With the invention recited in claim 12, bidirectional rotary power is transmitted incessantly between two pulleys having rotation axes aligned on a common line and a plurality of abutting pulleys coupled to each other to form a loop and having rotation axes orthogonal to the rotation axes of the rotation axes the two aligned pulleys.

With the invention recited in claim 13, the use of a timing belt as the fan loop belt ensures a proper engagement between the teeth and the grooves without the belt going slack or meeting with like occurrences, and ensures incessant bidirectional rotary power transmission between a plurality of abutting pulleys of nonparallel rotation axes.

With the invention recited in claim 14, an intersecting-axes differential mechanism using a belt is realized that is light-weight, that minimizes backlashes, and that is highly durable. The use of a wire necessitates the pulleys to be stepped in four levels in order to obtain a differential mechanism. Contrarily, only a single step is necessary on the pulleys with the invention recited in claim 14, resulting in reductions in size and weight. Thus, an intersecting-axes differential mechanism using a belt is realized that minimizes backlashes and that is highly durable.

With the invention recited in claim 15, the use of materials such as sheet metals and plastics ensures reductions in size, weight, and cost.

With the invention recited in claim 16, power is transmitted without the belt going into a skid in the direction of the apex of the cone and in the direction of power transmission.

With the invention recited in claim 17, a highly rigid fan belt is produced in a facilitated manner.

With the invention recited in claim 18, power is transmitted without the belt going into a skid in the direction of the apex of the cone and in the direction of power transmission.

With the invention recited in claim 19, power is transmitted without the pulleys interrupting each other.

With the invention recited in claim 20, power is transmitted without the belt going into a skid in the direction of the apex of the cone and in the direction of power transmission.

With the invention recited in claim 21, a timing fan belt is produced in a facilitated manner.

Brief Description of the Drawings

FIGs. 1A, 1B and 1C are three elevational views of a nonparallel-axes belt transmission mechanism according to a first embodiment of the present invention;

FIG. 2 shows a developed view and a cross-sectional view of a fan belt of a nonparallel-axes belt transmission mechanism according to a second embodiment of the present invention;

FIG. 3A is a top view of a nonparallel-axes belt transmission mechanism according to a third embodiment of the present invention, and FIG. 3B is a front view of the nonparallel-axes belt transmission mechanism;

FIG. 4 is a cross-sectional view illustrating a dimension calculation method according to the third embodiment of the present invention;

FIG. 5 is another cross-sectional view illustrating a dimension calculation method according to the third embodiment of the present invention;

FIG. 6 shows developed views of fan loop belts of a nonparallel-axes belt transmission mechanism according to a fourth embodiment of the present invention;

FIGs. 7A, 7B, and 7C are three elevational views of an intersecting-axes differential belt transmission mechanism according to a fifth embodiment of the present invention, illustrating main portions of the intersecting-axes differential belt transmission mechanism, and FIG. 7D is a perspective view of the intersecting-axes differential belt transmission mechanism, illustrating its main portions;

FIG. 8 is a perspective view of the intersecting-axes differential belt transmission mechanism according to the fifth embodiment of the present invention, illustrating the entire configuration of the intersecting-axes differential belt transmission mechanism;

FIG. 9 is an exploded view of the intersecting-axes differential belt transmission mechanism according to the fifth embodiment of the present invention, illustrating the inner structure of the intersecting-axes differential belt transmission mechanism;

FIG. 10A is a front view of an intersecting-axes differential belt transmission mechanism according to a sixth embodiment of the present invention, illustrating main portions of the intersecting-axes differential belt transmission mechanism, FIG. 10B is a right side view of the intersecting-axes differential belt transmission mechanism, illustrating its main portions, and FIG. 10C is a perspective view of the intersecting-axes differential belt transmission mechanism, illustrating its main portions;

FIG. 11 is a graph showing calculation examples of a development center angle according to the sixth embodiment of the present invention;

FIG. 12 is a developed view of a part of a fan belt according to an eighth embodiment of the present invention;

FIG. 13 is a view of main portions of the configuration according to a ninth embodiment of the present invention;

FIG. 14 is an external view of an intersecting-axes differential joint unit according to a tenth embodiment of the present invention;

FIG. 15 is an external view of a robot arm employing intersecting-axes differential joint units according to the tenth embodiment of the present invention;

FIG. 16 is a perspective view of conical pulleys and a fan belt according to an eleventh embodiment of the present invention;

FIG. 17 is a cross-sectional view of the conical pulleys according to the eleventh embodiment of the present invention, illustrating the engagement between the conical pulleys;

FIG. 18 is a perspective view of conical pulleys and a fan belt according to a twelfth embodiment of the present invention; and

FIG. 19 is a part drawing of the conical pulleys separated from the fan belt according to the twelfth embodiment of the present invention.

Modes for Carrying out the Invention

First Embodiment

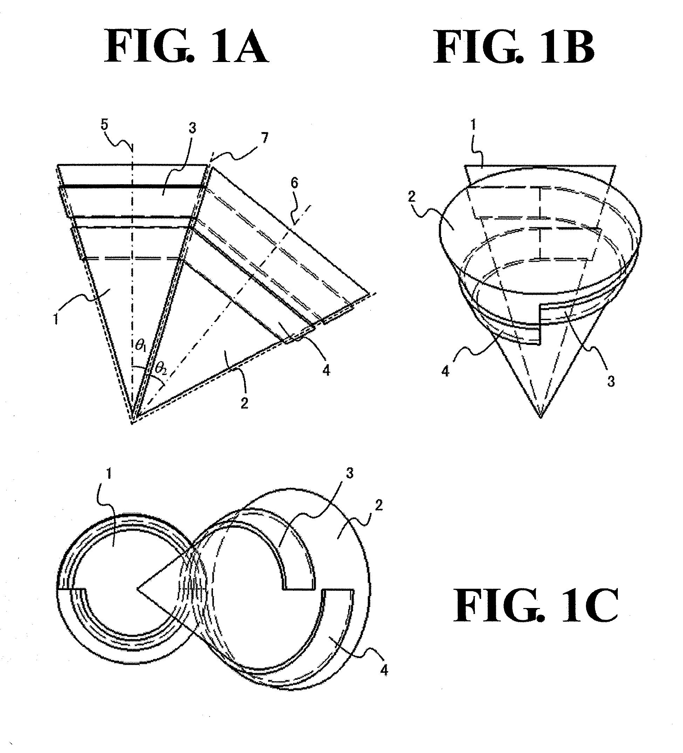

FIGs. 1A, 1B, and 1C are three elevational views, which are among the simplest exemplary configurations, of a nonparallel-axes belt transmission mechanism according to the first embodiment of the present invention. Specifically, FIG. 1A is a front view, FIG. 1B is a right side view, and FIG. 1C is a bottom view. While only main portions are illustrated to facilitate comprehension and for simplicity, support mechanisms and other components are necessary in operation. Referring to FIGs. 1A, 1B, and 1C, reference numerals 1 and 2 denote conical pulleys, and 3 and 4 denote fan belts. As used herein, the term "conical pulley" is based on a conical surface imaginarily set as being in contact with the fan belts, and is defined as having the shape of this conical surface removing the thickness of the belts that are in contact with the conical surface. The conical surface that is imaginarily set will be hereinafter referred to as an "imaginary conical surface". The conical pulley 1 is secured rotatably about a rotation axis 5, while the conical pulley 2 is secured rotatably about a rotation axis 6. Each of the rotation axes 5 and 6 is identical to the center line of the corresponding imaginary conical surface.

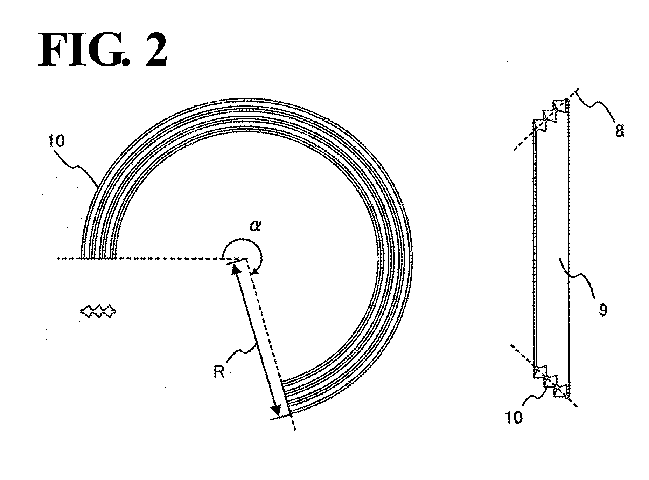

While the term "cone" is used for convenience sake, the imaginary conical surface of each of the conical pulleys 1 and 2 may not necessarily form an apexed cone. In operation, it suffices that each imaginary conical surface be conical at the portions of contact with the fan belts. The conical pulleys 1 and 2 abut on one another such that the apexes of the respective imaginary conical surfaces match. That is, the rotation axis 5 and the rotation axis 6 intersect at the apexes of the respective imaginary conical surfaces. As used herein, the term "fan belt" is defined as a belt having a fan shape in a developed plan view. While the term "fan shape" is used, the fan belt may not necessarily have an apexed fan shape. In operation, the term "fan shape" encompasses a band shape drawing an arc as shown in FIG. 2. The above-described arrangement of the two conical pulleys ensures that a fan belt of a predetermined radius is wound around the two pulleys without the fan belt going slack. The above-described arrangement also ensures that power is transmitted incessantly between the two conical pulleys by their rotation without a skid at the portion of their contact. This ensures power transmission through a belt even between pulleys of nonparallel rotation axes. The fan belts 3 and 4 each are a flat belt, with an imaginary conical surface 7 set along the center of the thickness of each flat belt.

Hence, the conical shape of each of the conical pulleys 1 and 2 has a radius smaller than the radius of the corresponding imaginary conical surface 7 by half the belt thickness. The conical pulleys 1 and 2 are disposed with the respective imaginary conical surfaces 7 in contact with one another, and this leaves a gap between the conical pulleys 1 and 2 corresponding to the thickness of the fan belts 3 and 4. The outer radius of each fan belt in a developed view, as shown in FIG. 2, will be hereinafter referred to as "development radius". The center angle in the developed view will be hereinafter referred to as a "development center angle". The development center angle corresponds to the length of each belt. In this embodiment, the fan belt 3 has its both ends respectively secured to the conical pulleys 1 and 2, and the fan belt 4 has its both ends respectively secured to the conical pulleys 1 and 2. In this embodiment, the fan belt 3 and the fan belt 4 are displaced from one another in order to minimize interference between the fan belt 3 and the fan belt 4. This makes the development radius of the fan belt 3 larger than the development radius of the fan belt 4.

The contact surface between the imaginary conical surface of the conical pulley and the fan belt can be regarded as a part of the side surface of a truncated cone. In view of this, the conical pulley at its surface of contact with the fan belt can also be seen in a developed plan view, with a development radius and a development center angle of the conical pulley itself. The portion of contact between the conical pulley 1 and the fan belt 3 has the same development radius as the development radius at the portion of contact between the conical pulley 2 and the fan belt 3. Likewise, the portion of contact between the conical pulley 1 and the fan belt 4 has the same development radius as the development radius at the portion of contact between the conical pulley 2 and the fan belt 4. The radius of the bottom surface of each truncated cone will be hereinafter referred to as a "truncated cone bottom radius". The angle defined between the generatrix and the rotation axis of the cone will be hereinafter referred to as a "cone angle". The geometry of the belt transmission mechanism of this embodiment is designed by first determining: a truncated cone bottom radius $r_1$ formed by the conical pulley 1 and the fan belt 3, a truncated cone bottom radius $r_2$ formed by the conical pulley 2 and the fan belt 3, and an angle $\psi$ formed by the rotation axis 5 and the rotation axis 6. These values are used to determine the development radius R of the fan belt 3, the cone angle $\theta_1$ of the conical pulley 1, and the cone angle $\theta_2$ of the conical pulley 2, while ensuring that the following relationships are satisfied.

Equations 1

$$\begin{cases} r_1 = R\sin\theta_1 \\ r_2 = R\sin\theta_2 \\ \psi = \theta_1 + \theta_2 \end{cases}$$

These equations are solved to determine R, $\theta_1$, and $\theta_2$ in the following manner.
Equations 2

$$R = \frac{\sqrt{r_1^2 + r_2^2 + 2r_1 r_2 \cos\psi}}{\sin\psi}$$

$$\theta_1 = \sin^{-1}\frac{r_1}{R}$$

$$\theta_2 = \sin^{-1}\frac{r_2}{R}$$

The development radius R' of the fan belt 4 may be determined similarly to the fan belt 3, using a truncated cone bottom radius $r_1$' formed by the conical pulley 1 and the fan belt 4 and a truncated cone bottom radius $r_2$' formed by the conical pulley 2 and the fan belt 4. In this regard, the ratio between the truncated cone bottom radii $r_1$' and $r_2$' is made equal to the ratio between $r_1$ and $r_2$. Alternatively, the development radius r' of the fan belt 4 may be first determined while avoiding overlapping with the fan belt 3, and then the truncated cone bottom radii $r_1$' and $r_2$' may be determined using the following equations.
Equations 3

$$r_1' = R'\sin\theta_1$$

$$r_2' = R'\sin\theta_2$$

In this embodiment, the pulleys are conical pulleys and the belts are fan belts, and the conical pulleys are disposed such that the respective apexes match. This ensures that power is transmitted between non-intersecting axes without twisting the belts.

Description will be made with regard to how the mechanism according to this embodiment operates. When the conical pulley 1 rotates about the rotation axis 5 in the clockwise direction as viewed from top, the fan belt 3 is wound up, causing the conical pulley 2 to rotate about the rotation axis 6 in the counterclockwise direction as viewed from top. Meanwhile, the fan belt 4 is wound up around the conical pulley 2, and thus kept from going slack or meeting with like occurrences. When the conical pulley 1 rotates about the rotation axis 5 in the counterclockwise direction as viewed from top, the fan belt 4 is wound up, causing the conical pulley 2 to rotate about the rotation axis 6 in the clockwise direction as viewed from top. Thus, the rotation of the rotation axis 5 is transmitted to the rotation axis 6, which is not parallel to the rotation axis 5. The transmission is accelerated or decelerated depending on the ratio between $r_1$ and $r_2$. In this embodiment, the fan belts 3 and 4 each are secured at both ends. In this case, the largest possible number of rotations to be transmitted is one. In view of this, at $r_1 \leq r_2$, the development center angle $\alpha$ of each of the fan belts 3 and 4 may be set as shown below. This makes the range of transmission of rotation as extensive as approximately one full rotation of the smaller pulley, which is the conical pulley 1.

<div align="center">

Equation 4

$$\alpha = \frac{2\pi\, r_1}{R} = 2\pi \sin\theta_1$$

</div>

At $r_1 = r_2$, $\theta_1$ is $\pi/4$, and the development center angle $\alpha$ is as follows.

<div align="center">

Equation 5

$$\alpha = \sqrt{2}\pi$$

</div>

If the thickness of each of the fan belts 3 and 4 is small enough to enlarge the respective development center angles and to wind each belt a plurality of turns, approximately a plurality of rotations can be transmitted. In practice, however, a belt superimposed on itself has a changing radius due to the thickness of the superimposition, which makes accurate transmission difficult.

Second Embodiment

In the second embodiment, a V ribbed belt is used as an exemplary fan belt. FIG. 2 shows the fan belt according to this embodiment in a developed plan view. In the first embodiment, the fan belts 3 and 4 are described as having flat surfaces. In practice, however, it is necessary to prevent the fan belts 3 and 4 from going into a skid, since the fan belt 3 receives force acting in the direction of the apex of the conical pulley 1, while the fan belt 4 receives force acting in the direction of the apex of the conical pulley 2. This may be addressed by using V belts or V ribbed belts as the fan belts 3 and 4. Reference numeral 10 denotes a fan belt used in combination with a conical pulley, similarly to the first embodiment.

FIG.2 shows a cross-sectional view of the fan belt 10. The fan belt 10 receives force more intensely on the surfaces of the fan belt 10 facing the center of the fan belt 10. In view of this, the V shaped cross-section is not symmetrical; instead, the surfaces of the fan belt 10 facing the center of the fan belt 10 are approximately vertical, as shown in FIG. 2. When a timing belt or a V belt is used as the fan belt, the conical pulley has, on its surface, protrusions and depressions that correspond to the surface of the fan belt in contact with the conical pulley. The protrusions and depressions are provided based on the imaginary conical surface of the conical pulley. As shown in FIG. 2, a conical pulley 9 has a shape of an imaginary conical surface 8 removing the shape of the fan belt 10 in contact with the conical pulley 9.

Third Embodiment

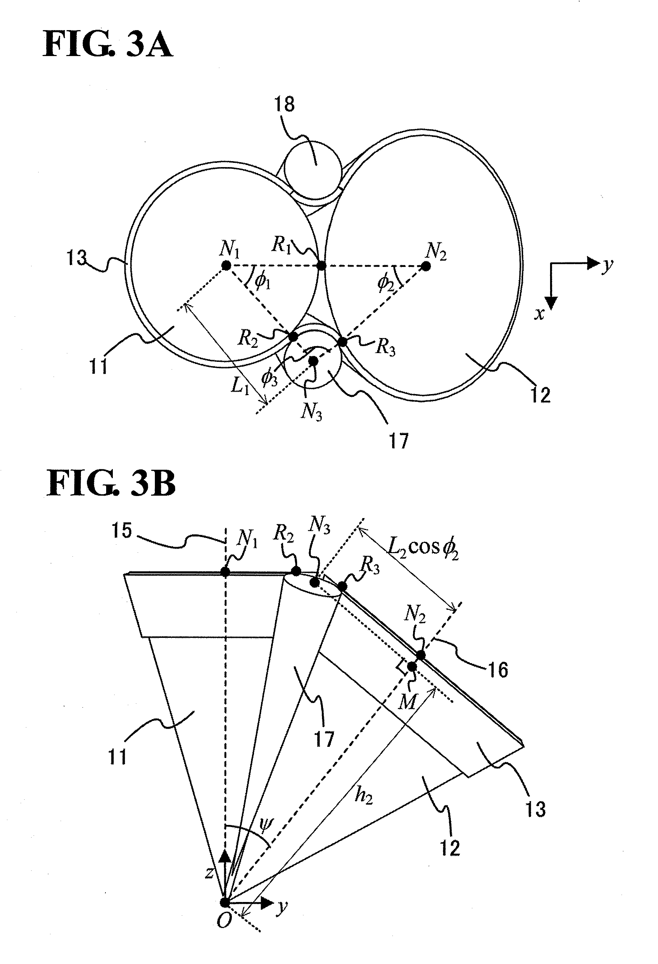

FIGs. 3A and 3B schematically show main portions of a nonparallel-axes belt transmission mechanism according to the third embodiment. FIG. 3A is a top view of the nonparallel-axes belt transmission mechanism, and FIG. 3B is a front view of the nonparallel-axes belt transmission mechanism. Referring to FIGs. 3A and 3B, reference numerals 11 and 12 denote main conical pulleys, 17 and 18 denote guide conical pulleys, and 13 denotes a fan loop belt. In this embodiment, a single, loop shaped fan belt is used. Similarly to the first embodiment, the main conical pulleys 11 and 12 and the guide conical pulleys 17 and 18 are rotatable about the center lines of the respective imaginary conical surfaces. The main conical pulleys 11 and 12 and the guide conical pulleys 17 and 18 abut on each other such that the apexes of the respective imaginary conical surfaces match.

That is, the rotation axes of the main conical pulleys 11 and 12 and the guide conical pulleys 17 and 18 intersect at the apexes of the respective imaginary conical surfaces. This arrangement of the conical pulleys turns the fan belt into loops of the same radii as the radii of the respective corresponding conical pulleys. This, in turn, ensures continuous transmission of a plurality of rotations. When the main conical pulleys 11 and 12 have large cone angles, the development center angle of the fan loop belt 13 might exceed $2\pi$. Even in this case, a fan loop belt is realized by preparing a plurality of fan belts and joining them to each other into a loop.

Also in this embodiment, a determination is first made as to a truncated cone bottom radius $r_1$ formed by the main conical pulley 11 and the fan loop belt 13, a truncated cone bottom radius $r_2$ formed by the main conical pulley 12 and the fan loop belt 13, and an angle $\psi$ formed by a rotation axis 15 and a rotation axis 16. These values are used to determine the development radius R of the fan loop belt 13, the cone angle $\theta_1$ of the main conical pulley 11, and the cone angle $\theta_2$ of the main conical pulley 12, using equations similar to the equations in the first embodiment. Additionally, the truncated cone bottom radius formed by the guide conical pulley 17 and the fan loop belt 13 is determined, and the truncated cone bottom radius formed by the guide conical pulley 18 and the fan loop belt 13 is determined. The truncated cone bottom radius of the guide conical pulley 17 may be different from the truncated cone bottom radius of the guide conical pulley 18. In this embodiment, however, both truncated cone bottom radii are denoted $r_3$ for simplicity. The cone angle $\theta3$ of each of the guide conical pulleys 17 and 18 is obtained using the following equation.

Equation 6

$$\theta_3 = \sin^{-1}\frac{r_3}{R}$$

Description will be now made with regard to determination of the angle of the rotation axis of each of the guide conical pulleys 17 and 18, and determination of the development center angle of the fan loop belt 13 in this embodiment. When the guide conical pulleys 17 and 18 are the same in shape, the rotation axes of the guide conical pulleys 17 and 18 are symmetrical with the same angles. In view of this, the following calculations will be concerning the guide conical pulley 17 alone. The intersection point between the truncated cone bottom surface and the rotation axis of the main conical pulley 11 will be denoted $N_1$. The intersection point between the truncated cone bottom surface and the rotation axis of the main conical pulley 12 will be denoted $N_2$. The intersection point between the truncated cone bottom surface and the rotation axis of the guide conical pulley 17 will be denoted $N_3$. Further in this embodiment, the contact point between the truncated cone bottom surface of the main conical pulley 11 and the truncated cone bottom surface of the main conical pulley 12 will be denoted $R_1$. The truncated cone bottom surface of the main conical pulley 11 is in contact with the truncated cone bottom surface of the guide conical pulley 17, and the contact point will be denoted $R_2$. The contact point between the truncated cone bottom surface of the main conical pulley 12 and the truncated cone bottom surface of the guide conical pulley 17 will be denoted $R_3$. The vector in the direction from point A to point B will be denoted "vector A $\rightarrow$ B". The apexes of the conical pulleys will be assumed an origin O, with a Z-axis assumed in the direction of the vector O $\rightarrow N_1$.

A Y-axis, which is perpendicular to the Z-axis, is assumed on the plane formed by the vector $\theta \rightarrow N_1$ and the vector O $\rightarrow N_2$. An X-vector is assumed in the direction of the cross product of the vector O $\rightarrow N_2$ and the vector O $\rightarrow N_1$. The angle defined between the vector $N_1 \rightarrow R_1$ and the vector $N_1 \rightarrow R_2$ will be denoted $\varphi_1$. The angle defined between the vector $N_2 \rightarrow R_1$ and the vector $N_2 \rightarrow R_3$ will be denoted $\varphi_2$. The angle defined between the vector $N_3 \rightarrow R_3$ and the vector $N_3 \rightarrow R_2$ will be denoted $\varphi_3$. The point $N_3$ is located on the O-$N_1$-$R_2$ plane and on the O-$N_2$-$R_3$ plane. Hence, determining the angles $\varphi_1$ and $\varphi_2$ ensures determination of the rotation axis direction of the guide conical pulley 17. Also, once the angles $\varphi_1$, $\varphi_2$, and $\varphi_3$ are determined, the development center angle $\alpha$ of the fan loop belt 13 is determined using the following equation.

Equation 7

$$\alpha = \frac{2(\pi - \phi_1)r_1 + 2(\pi - \phi_2)r_2 + 2\phi_3 r_3}{R}$$
$$= 2(\pi - \phi_1)\sin\theta_1 + 2(\pi - \phi_2)\sin\theta_2 + 2\phi_3\sin\theta_3$$

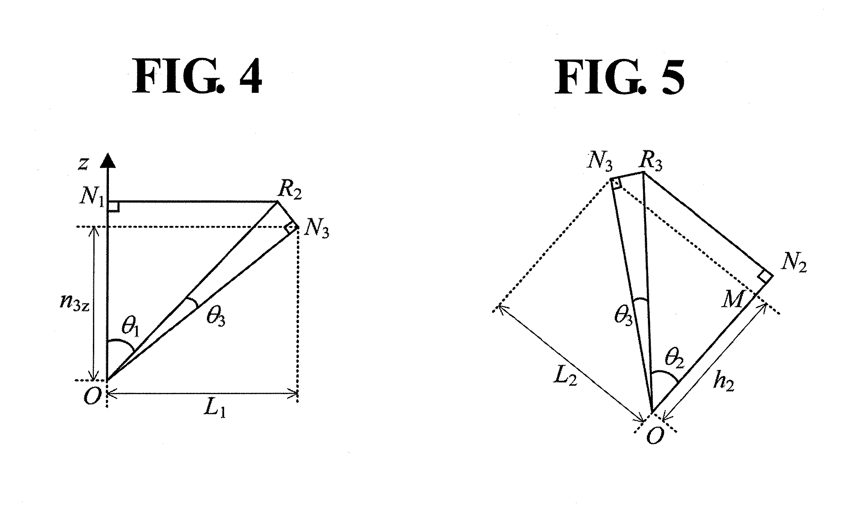

FIG. 4 shows a cross-section of the O-$N_3$-$R_2$-$N_1$ plane. As shown in FIG. 4, the Z-coordinate $n_{3z}$ of the point $N_3$ and the distance $L_1$ between the point $N_3$ and the Z-axis are obtained in the following manner.

Equation 8

$$n_{3z} = R\cos\theta_3 \cos(\theta_1 + \theta_3)$$

Equation 9

$$L_1 = R\cos\theta_3 \sin(\theta_1 + \theta_3)$$

FIG. 5 shows a cross-section of the O-$N_2$-$R_3$-$N_3$ plane. The intersection point between the rotation axis 16 of the main conical pulley 12 and a perpendicular line from the point $N_3$ to the rotation axis 16 will be denoted a point M. As shown in FIG. 5, the magnitude h2 of the vector O $\rightarrow$ M and the magnitude L2 of the vector M $\rightarrow$ $N_3$ are obtained in the following manner.
Equations 10

$$h_2 = R\cos\theta_3 \cos(\theta_2 + \theta_3)$$
$$L_2 = R\cos\theta_3 \sin(\theta_2 + \theta_3)$$

FIG. 3B shows a projection of the vector M $\rightarrow$ $N_3$ on the Y-Z plane. As shown in FIG. 3B, the Y-coordinate $n_{3y}$ and the Z-coordinate $n_{3z}$ of the point $N_3$ are obtained in the following manner.
Equation 11

$$n_{3y} = h_2 \sin\psi - L_2 \cos\phi_2 \cos\psi$$

Equation 12

$$n_{3z} = h_2 \cos\psi + L_2 \cos\phi_2 \sin\psi$$

Referring to Equations 8 and 12, $n_{3z}$ is canceled, and then $h_s$ and $L_2$ in the resulting equation are substituted by Equations 10. Then, $\varphi_2$ is obtained in the following manner.
Equation 13

$$\phi_2 = \cos^{-1}\frac{\cos(\theta_1 + \theta_3) - \cos\psi \cos(\theta_2 + \theta_3)}{\sin\psi \sin(\theta_2 + \theta_3)}$$

As shown in FIG. 3A, the angle $\varphi_1$ is obtained in the following manner.
Equation 14

$$\phi_1 = \cos^{-1}\frac{n_{3y}}{L_1}$$

$$= \cos^{-1}\frac{\cos\psi\cos(\theta_1+\theta_3)-\cos(2\psi)\cos(\theta_2+\theta_3)}{\sin\psi\sin(\theta_1+\theta_3)}$$

As shown in FIG. 3A, $n_{3x}$ is obtained in the following manner.
Equation 15

$$n_{3x} = L_1\sin\phi_1$$

Thus, the coordinates of the point $N_3$ are obtained. As shown in FIGs. 3A and 3B, the coordinates of each of the points $R_2$ and $R_3$ are obtained in the following manner.
Equations 16

$$\overrightarrow{OR_2} = (r_1\sin\phi_1,\ r_1\cos\phi_1,\ R\cos\theta_1)$$

$$\overrightarrow{OR_3} = (r_2\sin\phi_2,\ R\cos\theta_2\sin\psi - r_2\cos\psi,\ R\cos\theta_2\cos\psi + r_2\sin\psi)$$

Now that the coordinates of the points $N_3$, $R_2$, and $R_3$ are obtained, $\varphi_3$ is determined in the following manner.
Equation 17

$$\phi_3 = \cos^{-1}\frac{\overrightarrow{N_3R_2}\cdot\overrightarrow{N_3R_3}}{\left|\overrightarrow{N_3R_2}\right|\left|\overrightarrow{N_3R_3}\right|}$$

Thus, the rotation axis direction of each guide conical pulley and the development center angle of the fan loop belt 13 are obtained, resulting in a nonparallel-axes belt transmission mechanism. Such nonparallel-axes belt transmission mechanism ensures a nonparallel-axes that reduces weight and backlashes as compared with bevel gears, and that ensures high rigidity and high durability as compared with wire transmission mechanisms. Forth Embodiment

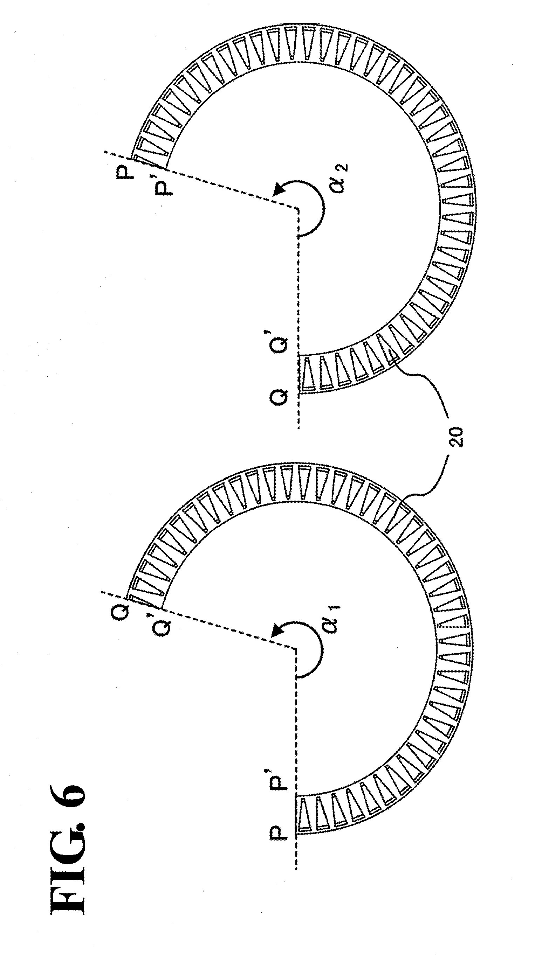

In the fourth embodiment, a timing belt is used as an exemplary fan loop belt. FIG. 6 shows a developed plan view of the fan loop belt according to this embodiment. Reference numeral 20 denotes a fan loop belt, which is a timing belt including teeth on one surface. The toothed surface of the fan loop belt 20 is on the main conical pulley side, and the main conical pulleys are each a timing pulley including grooves that match the teeth. Employing a timing belt ensures bidirectional rotary power transmission without a skid at the surfaces of contact between the conical pulleys and the fan loop belt. The fan loop belt 20 includes two fan belts jointed to one another at lines PP' and QQ'. This configuration is, of course, viable due to the flexibility of the belts. The fan loop belt 20 in this case has a development center angle of $\alpha_1 + \alpha_2$. As shown in FIG. 6, the teeth of the timing belt each have an incremental width toward the outer circumference of the fan shape. This ensures that the teeth of the fan loop belt 20 serve as wedges fitted in the grooves of each main conical pulley, and thus receive the force acting in the direction of the apexes of the main conical pulleys. This, as a result, eliminates or minimizes a skid. The guide pulley side of the fan loop belt 20 may not be toothed and may come in contact with the conical surface of each of guide pulley.

In the third embodiment, the truncated cone bottom radius $r_3$ of each guide conical pulley is first determined, followed by obtaining the development center angle $\alpha$ of the fan loop belt 13 corresponding to the truncated cone bottom radius $r_3$. In many cases, however, the radius $r_3$ may be at any value insofar as the radius $r_3$ is large enough to ensure the durability of the fan loop belt and small enough to eliminate mechanistical interference with other components. Meanwhile, when a timing belt is used as the fan loop belt, it is necessary to determine the development center angle $\alpha$ such that the number of teeth is an integer. Therefore, it is preferred to first determine the angle $\alpha$ and then to obtain the radius $r_3$ corresponding to the angle $\alpha$. It is difficult, however, to obtain associated equations analytically. In this case, a calculator may be used to repeat the calculation using $r_3$ to obtain the angle $\alpha$ until the calculation result converges to a sufficient accuracy.

Fifth Embodiment

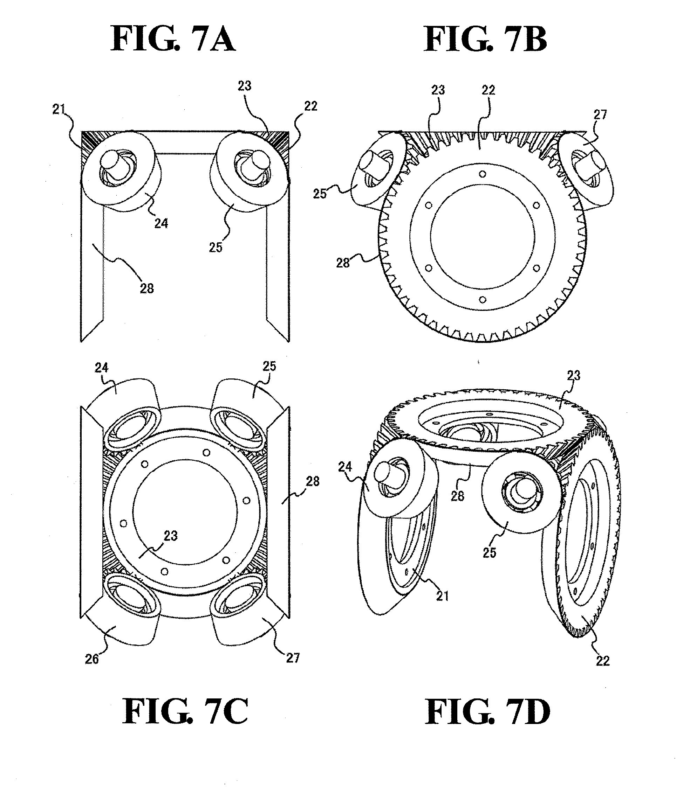

FIG. 7A is a front view of main portions according to the fifth embodiment, FIG. 7B is a right side view of the main portions according to the fifth embodiment, FIG.7C is a bottom view of the main portions according to the fifth embodiment, and FIG. 7D is a perspective view of the main portions according to the fifth embodiment. Referring to FIGs. 7A to 7D, reference numerals 21 and 22 denote input conical pulleys, 23 denotes a main conical pulley, 24, 25, 26, and 27 denote guide conical pulleys, and 28 denotes a fan loop belt. In this embodiment, a single fan loop belt 28 is used to transmit power. The fan loop belt 28 has a fan and loop shape with a center angle in excess of $2\pi$. Similarly to the second embodiment, the input conical pulleys 21 and 22, the main conical pulley 23, and the guide conical pulleys 24, 25, 26, and 27 are rotatable about their respective center lines. The input conical pulleys 21 and 22, the main conical pulley 23, and the guide conical pulleys 24, 25, 26, and 27 abut on each other such that the apexes of the respective imaginary conical surfaces match. That is, the input conical pulleys 21 and 22, the main conical pulley 23, and the guide conical pulleys 24, 25, 26, and 27 have their rotation axes intersect at the apexes of the respective cones. It should be noted, however, that a gap corresponding to the thickness of the fan loop belt 28 is left among the input conical pulleys 21 and 22, the main conical pulley 23, and the guide conical pulleys 24, 25, 26, and 27. In this embodiment, the input conical pulley 21 and the input conical pulley 22 have the same truncated cone bottom radii. The input conical pulley 21 and the input conical pulley 22 have their rotation axes aligned on a common line.

The rotation axis of the main conical pulley 23 is orthogonal to the rotation axes of the input conical pulleys 21 and 22. The fan loop belt 28 is wound around the input conical pulleys 21 and 22, the main conical pulley 23, and the guide conical pulleys 24, 25, 26, and 27 in the manner shown in FIGs. 7A to 7D. The fan loop belt 28 is held taut by the four guide conical pulleys to effect a tension in the fan loop belt 28. This arrangement of the conical pulleys turns the fan belt into loops of the same radii as the radii of the respective corresponding conical pulleys. This, in turn, ensures continuous transmission of a plurality of rotations. In this embodiment, the fan loop belt 28 is a timing belt provided with teeth on its surface of contact with, for example, the input conical pulleys 21 and 22 and the main conical pulley 23. Employing a timing belt ensures bidirectional rotary power transmission without a skid at the surfaces of contact between the main conical pulley 23 and the fan loop belt 28. It is, of course, possible to use a flat belt or a V belt as the fan belt, in which case power is transmitted to and from the conical pulleys and the fan belt by friction. Alternatively, the fan belt may be partially secured to the conical pulleys, similarly to the first embodiment. This, however, limits the movable range to less than one rotation.

The input conical pulleys 21 and 22 may be symmetrical, and therefore, the cone bottom radii of the input conical pulleys 21 and 22 may be denoted collectively, $r_1$. The truncated cone bottom radius of the main conical pulley 23 will be denoted $r_2$, and the truncated cone bottom radius of each of the guide conical pulleys 24, 25, 26, and 27 will be denoted $r_3$. These may be used to calculate angles $\varphi_1$, $\varphi_2$, and $\varphi_3$, similarly to the second embodiment. In this embodiment, however, the rotation axes of the input conical pulley 21 and the main conical pulley 23 intersect at right angles, and the rotation axes of the input conical pulley 22 and the main conical pulley 23 intersect at right angles. Accordingly, assuming that $\psi = \pi/2$, the equations to obtain $\varphi_1$, $\varphi_2$, $n_{3y}$, the vector $O \rightarrow R_2$, and the vector $O \rightarrow R_3$ are simplified as follows.

Equations 18

$$\phi_1 = \cos^{-1} \frac{\cos(\theta_2 + \theta_3)}{\sin(\theta_1 + \theta_3)}$$

$$\phi_2 = \cos^{-1} \frac{\cos(\theta_1 + \theta_3)}{\sin(\theta_2 + \theta_3)}$$

$$n_{3y} = R \cos\theta_3 \cos(\theta_2 + \theta_3)$$

$$\overrightarrow{OR_2} = (r_1 \sin\phi_1, \ r_1 \cos\phi_1, \ r_2)$$

$$\overrightarrow{OR_3} = (r_2 \sin\phi_2, \ r_1, \ r_2 \cos\phi_2)$$

The development center angle $\alpha$ of the fan loop belt 28 is determined using the following equation with $\varphi_1$, $\varphi_2$, and $\varphi_3$.
Equations 19

$$\alpha = \frac{4(\pi - \phi_1)r_1 + 2(\pi - 2\phi_2)r_2 + 4\phi_3 r_3}{R}$$
$$= 4(\pi - \phi_1)\sin\theta_1 + 2(\pi - 2\phi_2)\sin\theta_2 + 4\phi_3 \sin\theta_3$$

The main conical pulley 23 is in contact with the fan loop belt 28 at two portions, and it is necessary to keep the engagement at one portion consistent with the engagement at the other portion. For example, when the input conical pulleys 21 and the main conical pulley 23 have the same shapes each with an odd number of tooth grooves, then it is necessary that the teeth of the fan loop belt 28 be an odd number. When the input conical pulleys 21 and the main conical pulley 23 have the same shapes each with an even number of tooth grooves, then it is necessary that the teeth of the fan loop belt 28 be an even number.

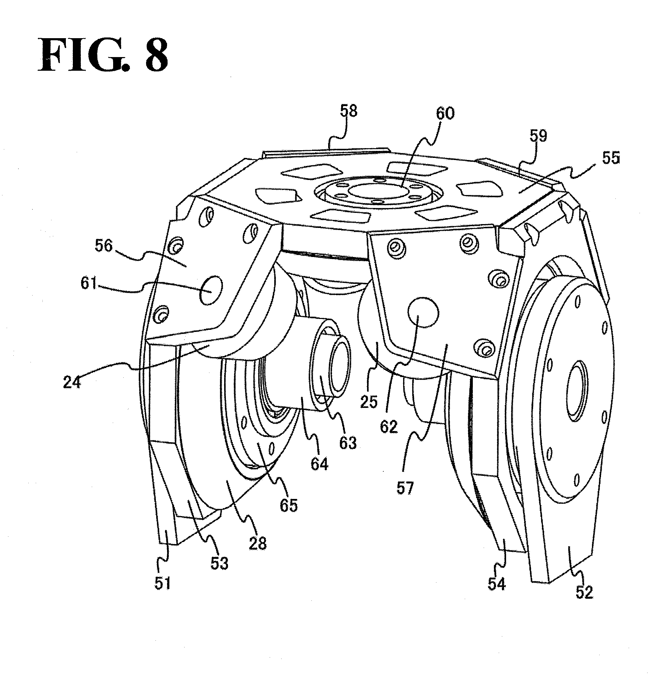

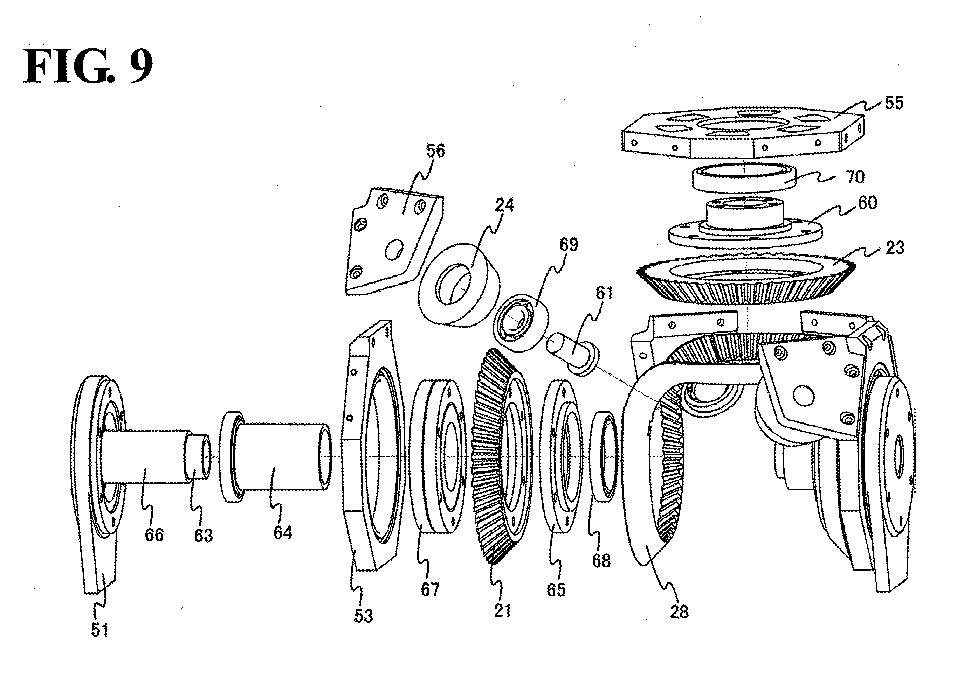

This intersecting-axes differential belt transmission mechanism serves as an intersecting-axes differential transmission mechanism that reduces weight and backlashes as compared with bevel gears, and that ensures high rigidity and high durability as compared with wire transmission mechanisms. Such transmission mechanism is used with power individually input to each of the input conical pulley 21 and the input conical pulley 22, and with the main conical pulley 23 secured to the output shaft. FIG. 8 shows the entire configuration of the mechanism according to the fifth embodiment, including supporting mechanisms and actuators. FIG. 9 is an exploded view of the intersecting-axes differential belt transmission mechanism. Some components are visible and other components are invisible because of illustration restrictions. It is noted that those invisible components do exist at positions that are anteroposteriorly and laterally symmetrical with respect to the corresponding visible components. The following description will be concerning the visible components. Also in the following description, the rotation axis of each of the input conical pulley 21 and the input conical pulley 22 will be referred to as a pitch axis, and the rotation axis of the main conical pulley 23 will be referred to as a roll axis. Referring to FIG. 8, reference numeral 51 denotes a securing support disk that secures and supports a hollow securing support shaft 63 and the circular spline of a harmonic gear 67.

In this embodiment, a harmonic gear 67 including two circular splines is considered as a reducer. It is also possible to use harmonic gears of other types or to use other reducers. On the hollow securing support shaft 63, an outer rotor motor stator 66 is secured. An outer rotor motor rotator 64 is supported rotatably about the pitch axis via a bearing. A wave generator, which serves as an input of the harmonic gear 67, is secured to the outer rotor motor rotator 64. The other circular spline of the harmonic gear 67 serves as its output, and the input conical pulley 21 is secured to the other circular spline. The input conical pulley 21 is rotatably supported about the pitch axis via a main pulley support disk 65 and a cross roller bearing 68. In this embodiment, the input conical pulley 21 is supported by the outer circumference of the outer rotor motor rotator 64, in order to reduce the dimensions of the mechanism as a whole. It is, of course, possible to support the input conical pulley 21 at a stationary member such as the hollow securing support shaft 63.

Reference numeral symbol 61 denotes a guide pulley support shaft that supports the guide conical pulley 24 rotatably about the center axis of the guide pulley support shaft 61 via a bearing 69. The guide pulley support shaft 61 is secured to a sub-support frame 56. A total of four sub-support frames 56 are disposed at four, anteroposteriorly and laterally symmetrical positions. The sub-support frames 56 are secured integrally with side support frames 53 and 54 and a top support frame 55. The sub-support frames 56, the side support frames 53 and 54, and the top support frame 55 are rotatably supported about the pitch axis via bearings disposed on the side support frames 53 and 54. Reference numeral 60 denotes an output shaft that is supported on the top support frame 55 via a bearing 70 rotatably about the roll axis. To the output shaft 60, the main conical pulley 23 is secured, so as to output power on the roll axis transmitted by the fan loop belt 28.

Description will be made with regard to how the mechanism according to this embodiment operates. When the input conical pulley 21 and the input conical pulley 22 are rotated in the same direction, the sum of the two kinds of torque involved is transmitted as the power to rotate the output shaft 60 about the pitch axis. For example, when the input conical pulley 21 and the input conical pulley 22 are rotated counterclockwise as viewed from the right side of FIGs. 8 and 9, the power is transmitted to the sub-support frames 56 and 57 via the fan loop belt 28, the guide conical pulleys 24 and 25, the bearings 69, and the guide pulley support shafts 61 and 62. The transmitted power rotates the output shaft 60 about the pitch axis integrally with the side support frames 53 and 54, the top support frame 55, and the bearing 70. When a difference exists in rotation torque between the input conical pulley 21 and the input conical pulley 22, a torque corresponding to the difference is transmitted by the fan loop belt 28 to the output shaft 60, which is rotated by the torque about the roll axis. It is noted that the rotation direction of this mechanism is opposite the rotation direction of a differential mechanism using bevel gears.

Japanese Unexamined Patent Application Publication No. 3-505067 necessitates the pulleys to be stepped in four levels in order to obtain a differential mechanism. Contrarily, in this embodiment, only a single step is necessary on the pulleys, resulting in reductions in size and weight. Additionally, using a belt ensures high durability as compared with the use of a wire. Additionally, the JP3-505067 publication ensures only one rotation, at most, of transmission. Contrarily, this embodiment ensures continuous transmission of a plurality of rotations. Applying this mechanism to interference-driven joint mechanisms of robots realizes robots reduced in size and weight.

Sixth Embodiment

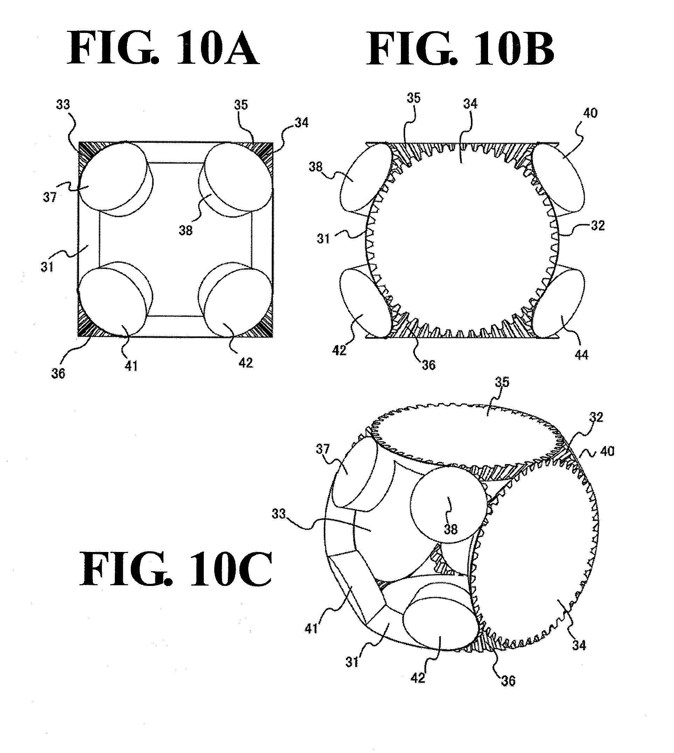

FIG. 10A is a front view of the mechanism according to the sixth embodiment, FIG. 10B is a right side view of the mechanism according to the sixth embodiment, and FIG. 10C is a perspective view of the mechanism according to the sixth embodiment. Referring to FIGs. 10A to 10C, reference numerals 33 and 34 denote input conical pulleys, 35 and 36 denote main conical pulleys, 37, 38, 40, 41, 42, and 44 denote guide conical pulleys, and 31 and 32 denote fan loop belts. The number of the guide conical pulleys is eight, some of which are invisible in FIGs. 10A to 10C. The invisible guide conical pulleys are disposed at positions that are anteroposteriorly and laterally symmetrical with respect to the corresponding visible guide conical pulleys. In this embodiment, two fan loop belts 31 and 32 are used to transmit power. While it is possible to use only one of the two fan loop belts in order to operate the differential mechanism, the use of both fan loop belts disperses the load that is otherwise placed on a single belt, withstanding larger levels of load. Further, when the same load torque is desired between the belts, the belts may be made thinner. The fan loop belts 31 and 32 each have a fan and loop shape with a center angle in excess of $2\pi$.

Similarly to the second and third embodiments, the input conical pulleys 33 and 34, the main conical pulleys 35 and 36, and the guide conical pulleys 37, 38, 40, 41, 42, and 44 are each rotatable about the center line of the corresponding imaginary conical surface. The input conical pulleys 33 and 34, the main conical pulleys 35 and 36, and the guide conical pulleys 37, 38, 40, 41, 42, and 44 abut on each other such that the apexes of the respective imaginary conical surfaces match. That is, the rotation axes of the input conical pulleys 33 and 34, the main conical pulleys 35 and 36, and the guide conical pulleys 37, 38, 40, 41, 42, and 44 intersect at the apexes of the respective imaginary conical surfaces. In this embodiment, the input conical pulleys 33 and 34 have the same truncated cone bottom radii, and are opposed to one another with the respective rotation axes aligned on a common line. Likewise, the main conical pulleys 35 and 36 have the same truncated cone bottom radii, and are opposed to one another with the respective rotation axes aligned on a common line. The rotation axes of the main conical pulleys 35 and 36 are orthogonal to the rotation axes of the input conical pulleys 33 and 34. The fan loop belt 31 is wound around the input conical pulleys 33 and 34, the main conical pulleys 35 and 36, and the guide conical pulleys 37, 38, 41, and 42 in the manner shown in FIG. 10A.

The fan loop belt 31 is held taut by four guide conical pulleys to effect a tension in the fan loop belt 31. The fan loop belt 32 is held taut by four guide conical pulleys at a position anteroposteriorly symmetrical with respect to the fan loop belt 31. This arrangement of the conical pulleys turns the fan belts into loops of the same radii as the radii of the respective corresponding conical pulleys. This, in turn, ensures continuous transmission of a plurality of rotations. The fan loop belts 31 and 32 each may be, for example, a timing belt similarly to the second and third embodiments.

The input conical pulleys 33 and 34 may be symmetrical, and the main conical pulleys 35 and 36 may be symmetrical. Therefore, the truncated cone bottom radii of the input conical pulleys 33 and 34 may be denoted collectively, $r_1$, and the truncated cone bottom radii of the main conical pulleys 35 and 36 may be denoted collectively, $r_2$. The truncated cone bottom radius of each of the eight guide conical pulleys will be denoted $r_3$. These may be used to calculate angles $\varphi_1$, $\varphi_2$, and $\varphi_3$, similarly to the second and third embodiments. The development center angle $\alpha$ of each of the fan loop belts 31 and 32 is determined from $\varphi_1$, $\varphi_2$, and $\varphi_3$ using the following equation.

Equation 20

$$\alpha = \frac{2(\pi - 2\phi_1)r_1 + 2(\pi - 2\phi_2)r_2 + 4\phi_3 r_3}{R}$$
$$= 2(\pi - 2\phi_1)\sin\theta_1 + 2(\pi - 2\phi_2)\sin\theta_2 + 4\phi_3\sin\theta_3$$

This intersecting-axes differential belt transmission mechanism serves as an intersecting-axes differential transmission mechanism that reduces weight and backlashes as compared with bevel gears, and that ensures high rigidity and high durability as compared with wire transmission mechanisms. Such transmission mechanism is used with power individually input to each of the input conical pulley 33 and the input conical pulley 34, and with the main conical pulley 35 (or the main conical pulley 36) secured to an output shaft. This structure ensures that the fan loop belt on one side can be detached by the simple operation of removing the four guide conical pulleys on the one side, thus facilitating maintenance.

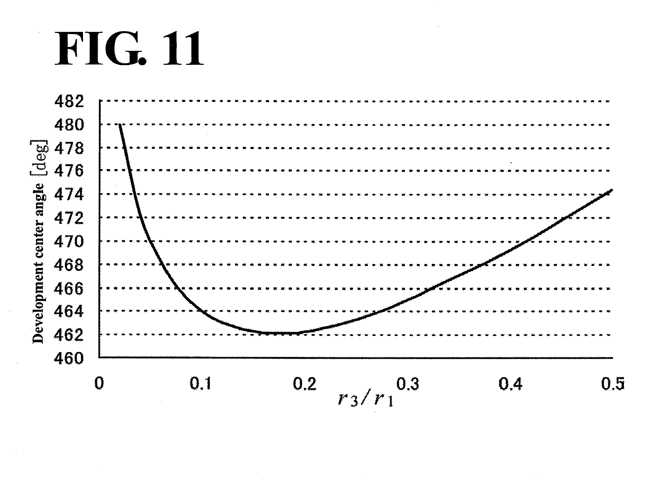

FIG. 11 shows examples of the development center angle calculated using Equation 20. It is assumed that the total of four input and main conical pulleys have the same shapes, and that the eight guide conical pulleys have the same shapes. In this case, the development center angle is determined by the ratio between the truncated cone bottom radius $r_1$ of the main conical pulleys and the truncated cone bottom radius $r_3$ of the guide conical pulleys. The graph shows that the appropriate development center angle of each fan loop belt is approximately from 462 degrees to 474 degrees. Let the number of teeth of each main conical pulley be T. Then, the tooth pitch p of each fan belt in developed configuration is represented as follows using the development center angle.

Equation 21

$$p = \frac{2\pi r_1}{RT}$$

It is necessary that the length of each fan belt be an integral multiple of p. At a teeth number T of 50, p is 5.09. The length of each fan belt is equivalent to 463.3 degrees at a teeth number T of 91; equivalent to 468.4 degrees at a teeth number T of 92; and equivalent to 473.5 degrees at a teeth number T of 93. The length of each fan belt is appropriate at no other teeth numbers T. Hence, the length of each fan loop belt (equivalent to the development center angle $\alpha$) is determined on any one of the above values, and then the ratio between $r_1$ and $r_3$ corresponding to the determined length is obtained from FIG. 11. Thus, $r_3$ is determined.

Seventh Embodiment

In the sixth embodiment, the rotation axes of the main conical pulleys 35 and 36 are aligned on a common line. Instead of aligning the rotation axes on a common line, it is also possible to provide three or more conical pulleys with their respective rotation axes orthogonal to the rotation axes of the input conical pulleys 33 and 34. This reduces load per fan loop belt, with the result, however, that the weight of the mechanism as a whole increases. In view of this, it is preferred in many applications that the number of the conical pulleys be not significantly large. Providing three or more conical pulleys makes each fan loop belt a simple circle depending on the dimensional conditions of the conical pulleys.

This facilitates the belt production.

Eighth Embodiment

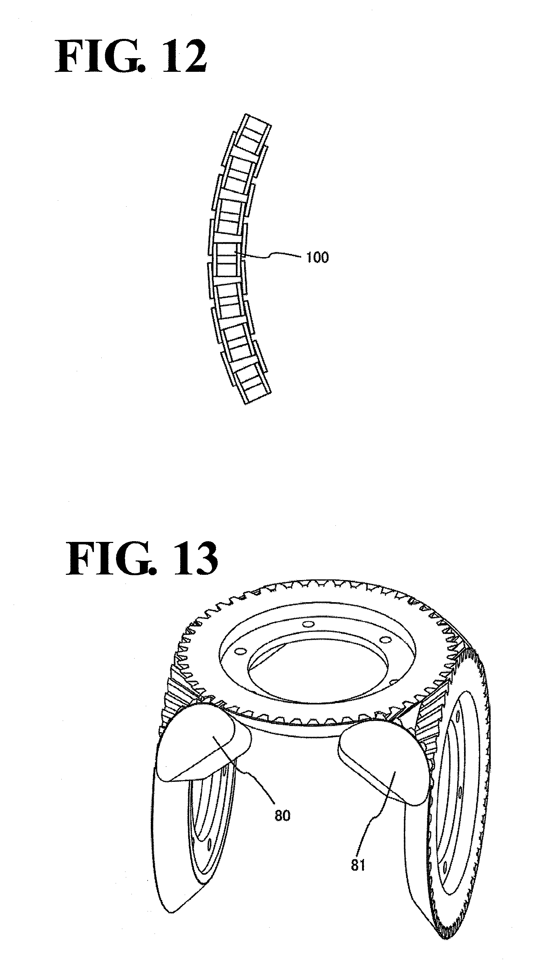

While in other embodiments description is made with regard to a belt, it is also possible to use a chain, in which case a similar transmission mechanism is realized. FIG. 12 shows a chain serving as the fan belt according to this embodiment. A general chain can be considered as a series of coupled small links that are rotatable about parallel axes. In this embodiment, slightly skewed axes, instead of parallel axes, are used to constitute the fan belt. In this case, the conical pulleys each may be a sprocket with protrusions perpendicular to the conical surface. When a belt is wound around a conical pulley with a tension effected in the belt, the belt receives a force acting in the direction of the apex of the conical pulley. This necessitates a belt of rubber or like material to utilize grooves, such as with the V belt, so as to avoid a skid. Contrarily, the use of a chain as the fan belt provides the advantage that the chain itself supports the skid-causing force.

Ninth Embodiment

FIG. 13 shows main portions of the mechanism according to the ninth embodiment. In this embodiment, sliding support members are used instead of the guide conical pulleys 24 to 27 according to the third embodiment. The ninth embodiment is otherwise similar to the third embodiment. Reference numerals 80 and 81 denote sliding support members. A total of four sliding support members, two of which are invisible on the rear side of FIG. 13, are disposed at anteroposteriorly and laterally symmetrical positions. The sliding support members 80 and 81 are secured to members corresponding to the sub-support frames 56 to 59 according to the third embodiment, and support the fan loop belt 28 through sliding contact. The surface of each sliding support member in contact with the fan loop belt 28 has a shape of an imaginary conical surface.

Sliding support members as compared with guide conical pulleys have less desirable aspects such as being less efficient in transmission due to friction of the sliding contact portions, more likely causing wear of the fan loop belt 28, and generating heat. Still, the sliding support members do not involve rotation themselves, and therefore, all that is necessary is a contact surface on a single side. This ensures use of metal plates or plastics as the sliding support members, providing advantages including reductions in size, weight, and cost.

Tenth Embodiment

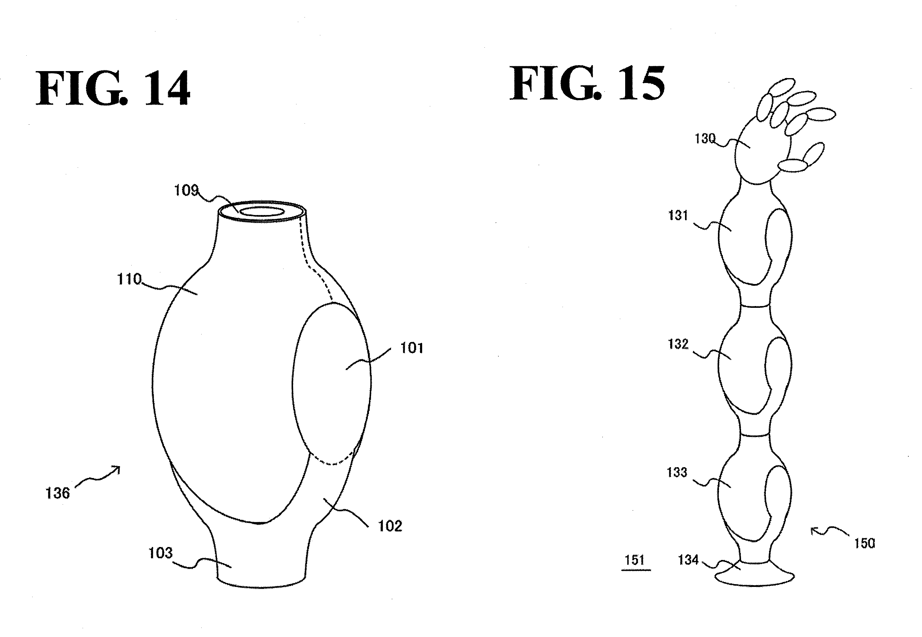

Description will now be made with regard to an exemplary robot arm that uses the intersecting-axes differential belt transmission mechanism according to any of the fifth to ninth embodiments. FIG. 14 is an external view of a joint unit 136 according to the tenth embodiment. Reference numeral 110 denotes a covered support structure in which a cover is secured over the side support frames 53 and 54, the top support frame 55, and the sub-support frames 56 to 59. Reference numeral 101 denotes a support disk corresponding to the securing support disk 52 shown in FIG. 8, with a cover secured to protect cables.

Reference numeral 109 denotes an output unit, which is secured to the output shaft 60 shown in FIG. 8. The support disk 101 is coupled to a support base 103 via a hollow support arm 102. The support structures between the hollow securing support shaft 63 and the support base 103 are coupled to each other with a hollow extending through the coupled support structures. Through the hollow, wirings are passed. Examples of the wirings include, but not limited to, motor power lines to supply electric power to the coils of the outer rotor motor stator 66, and encoder signal lines to transfer signals from an encoder, not shown, to a controller. Other examples of the wirings include other device wirings extending from devices, such as other differential joint units, coupled beyond the output unit 109. The other device wirings are passed through the hollow of the output unit 109 and introduced in the hollow securing support shaft 63. The wirings pass in the vicinity of vertical and horizontal rotation axes, and thus are less likely to go slack and be stretched with the joints in motion. This improves durability against repeated operations.

The covered support structure 110 rotates about the horizontal axis with the support disk 101 as the center of rotation, while the output unit 109 rotates about the vertical axis. With this structure, a differential joint unit is able to horizontally and vertically rotate a conveyed object attached to the distal end of the output unit 109. The two, horizontal and vertical output axes are configured to form an interference-driven joint mechanism, and this ensures that each axis provides a maximum output of twice the output of a single motor.

As shown in FIG. 15, a seven-degree-of-freedom robot arm is formed using joint units 136. The robot arm, 150, includes a robot base 134 with a pivot motor, joint units 131, 132, and 133, and a hand 130. The robot base 134 with a pivot motor secures the robot arm 150 to a stationary surface (for example, a floor in a factory), and the pivot motor rotates the entire robot arm 150 about a vertical axis. The joint units 131, 132, and 133 are coupled in series, with the output unit 109 of each joint unit coupled to the support base 103 of another joint unit. The hand 130 is an end effector controlled by the robot arm 150 in position and posture so as to assume various kinds of work including conveyance, assembly, welding, and painting. With this structure, the vertical multi-joint robot 150 of seven degrees of freedom according to this embodiment has an improved maximum output while realizing miniaturization (in particular, thinning).

Eleventh Embodiment

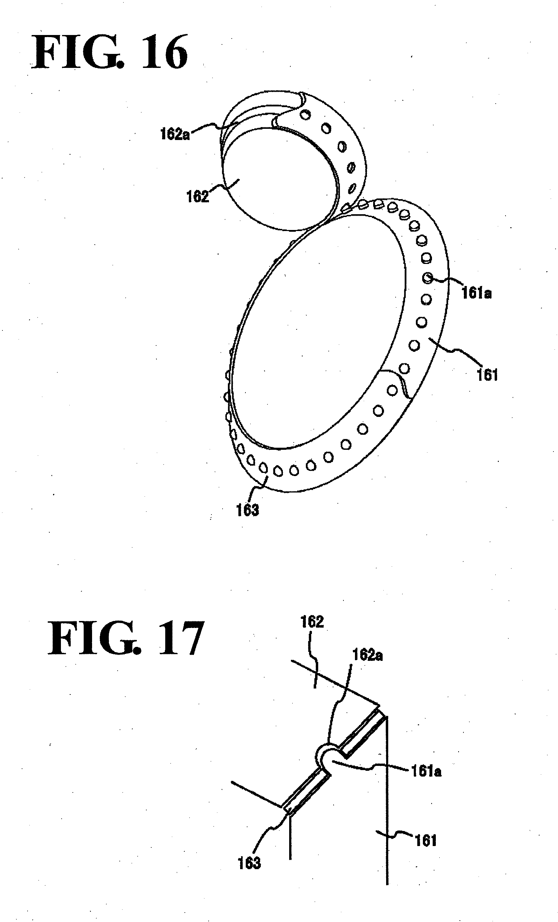

FIG. 16 is a perspective view of conical pulleys and a fan belt according to the eleventh embodiment. Reference numeral 161 denotes a sprocket conical pulley. The sprocket conical pulley 161 includes protrusions 161a disposed at equal intervals. Reference numeral 163 denotes a perforated fan belt, which includes holes corresponding to the protrusions 161 a. The engagement between the protrusions and the holes keeps the belt from going into a skid. As shown in FIG. 16, the holes each have a circular shape and the protrusions each have a column shape with a hemisphere on top. It is noted, however, that these shapes are for exemplary purposes. Other exemplary shapes of the protrusions include a conical shape. Alternatively, the holes each may have a rectangular shape or an elongated hole shape of two circles combined, while the protrusions each may have a shape engageable with the rectangular hole or the elongated hole. The perforated fan belt 163 may be a steel belt. Reference numeral 162 denotes a grooved conical pulley, which includes a groove 162a. FIG. 17 is a cross-sectional view of the engagement between the protrusions 161a and the groove 162a via the belt 163. The groove 162a minimizes interference between the conical pulley 162 and the protrusions 161 a coming out through the perforated fan belt 163. In the third, fifth, sixth, and ninth embodiments, the imaginary conical surface of the main conical pulley is in contact with the imaginary conical surface of the input conical pulley. If any of the main conical pulley and the input conical pulley in the contact arrangement is the sprocket conical pulley according to the eleventh embodiment, the protrusions 161a may interfere with the contact arrangement. This can be addressed by a separate arrangement, in which the imaginary conical surface of the main conical pulley is separated from the imaginary conical surface of the input conical pulley. It is not necessary that the imaginary conical surface of the main conical pulley be in contact with the imaginary conical surface of the input conical pulley. Instead, it suffices that the imaginary conical surface of the main conical pulley be in contact with the imaginary conical surface of the guide conical pulley, and that the imaginary conical surface of the input conical pulley be in contact with the imaginary conical surface of the guide conical pulley. When the imaginary conical surface of the main conical pulley is separated from the imaginary conical surface of the input conical pulley by an angle $\Delta\psi$, the dimensional calculations involve Equation 22.
Equation 22

$$\psi = \theta_1 + \theta_2 + \Delta\psi$$

The dimensional calculations are otherwise similar to the above-described embodiments.
Similarly to the above-described embodiments of transmitting power through the engagement between the fan belt and the conical pulley, it is necessary that the development center angle of the fan belt be an integral multiple of the pitch of the engagement between the fan belt and the conical pulley. In the sixth embodiment, the truncated cone bottom radius of the guide conical pulley is determined such that the development center angle of the fan loop belt is an integral multiple of the pitch p of the teeth of the main conical pulley. In the eleventh embodiment, the imaginary conical surface of the main conical pulley is separated from the imaginary conical surface of the input conical pulley by the angle $\Delta\psi$. In this case, it is possible to determine in advance the truncated cone bottom radius of the guide conical pulley in a convenient manner. Then, the angle $\Delta\psi$ may be determined such that the development center angle of the fan loop belt is an integral multiple of the pitch p of the engagement.

Twelfth Embodiment

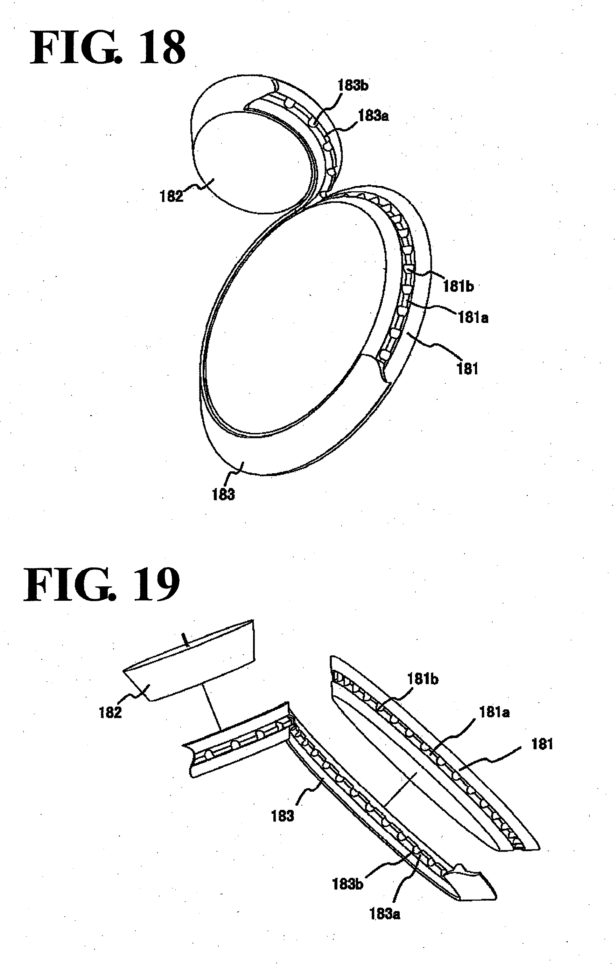

FIG. 18 is a perspective view of conical pulleys and a fan belt according to the twelfth embodiment. Reference numeral 181 denotes a timing conical pulley. The timing conical pulley 181 includes a V shaped groove 181a and protrusions 181b. The protrusions 181b are disposed at equal intervals. Reference numeral 183 denotes a timing fan belt. The timing fan belt 183 includes V shaped protrusions 183a corresponding to the V shaped groove 181a and depressions 183b corresponding to the protrusions 181b. FIG. 19 shows a separate arrangement of the belt and the pulleys, for clarity of the contact between the belt and the pulleys. The engagement between the V shaped groove 181 a and the V shaped protrusions 183a keeps the belt from going into a skid in the direction of power transmission, similarly to general timing belts. The engagement between the V shaped groove 181 a and the V shaped protrusions 183a also keeps the belt from going into a skid in the vertical direction, similarly to general V belts. The belt portion of the timing fan belt 183 may be a steel belt, while the V shaped groove 181a and the V shaped protrusions 183a each may be made of an elastic material such as urethane and rubber. In this case, the elastic materials are adhered to the steel belt. In this embodiment, the contact surface between the timing fan belt 183 and the conical pulley 182 is flat, and the conical pulley 182 is a usual conical pulley. The conical pulley 182, of course, may include the V shaped groove 181a, in which case the timing fan belt 183 may include the V shaped protrusions 183a on both surfaces. Alternatively, the front and rear surfaces of the timing fan belt 183 may be different in configuration, which may be implemented by combining the configurations recited in the above-described embodiments.

Industrial Applicability

With the use of a belt for power transmission between intersecting axes, the differential mechanism according to the embodiments minimizes backlashes, is highly durable, and is small in size and weight. The differential mechanism finds applications in joint mechanisms of robots such as shoulders, elbows, wrists, hip joints, knees, ankles, necks, waists, and fingers. The differential mechanism also finds applications in power transmission mechanisms each of which use two actuators to implement vehicle steering and rotation of tires, and also in pan/tilt/roll mechanisms of cameras.

Description of the Reference Numeral

| | |
|---|---|
| 1 | Conical pulley |
| 2 | Conical pulley |
| 3 | Fan belt |
| 4 | Fan belt |
| 5 | Rotation axis |
| 6 | Rotation axis |
| 7 | Imaginary conical surface |
| 10 | Fan belt |
| 11 | Conical pulley |
| 12 | Conical pulley |
| 13 | Loop fan belt |
| 17 | Guide conical pulley |
| 18 | Guide conical pulley |
| 20 | Loop fan belt |
| 21 | Input conical pulley |
| 22 | Input conical pulley |
| 23 | Main conical pulley |
| 24 | Guide conical pulley |
| 25 | Guide conical pulley |
| 26 | Guide conical pulley |
| 27 | Guide conical pulley |
| 28 | Loop fan belt |
| 51 | Securing support disk |
| 52 | Securing support disk |
| 53 | Side support frame |
| 54 | Side support frame |
| 55 | Top support frame |
| 56 | Sub-support frame |
| 57 | Sub-support frame |
| 58 | Sub-support frame |
| 59 | Sub-support frame |
| 60 | Output shaft |
| 61 | Guide pulley support shaft |
| 62 | Guide pulley support shaft |
| 63 | Hollow securing support shaft |
| 64 | Outer rotor motor rotator |
| 65 | Main pulley support disk |
| 66 | Outer rotor motor stator |

| 67 | Harmonic gear |
| 68 | Cross roller bearing |
| 69 | Bearing |
| 70 | Bearing |
| 31 | Loop fan belt |
| 32 | Loop fan belt |
| 33 | Input conical pulley |
| 34 | Input conical pulley |
| 35 | Main conical pulley |
| 36 | Main conical pulley |
| 37 | Guide conical pulley |
| 38 | Guide conical pulley |
| 40 | Guide conical pulley |
| 41 | Guide conical pulley |
| 44 | Guide conical pulley |
| 80 | Sliding support member |
| 81 | Sliding support member |
| 100 | Fan belt chain |
| 101 | Support disk |
| 102 | Hollow support arm |
| 103 | Support base |
| 109 | Output unit |
| 110 | Covered support structure |
| 136 | Joint unit |
| 131 | Joint unit |
| 132 | Joint unit |
| 133 | Joint unit |
| 134 | Robot base with pivot motor |
| 150 | Robot arm |
| 151 | Stationary surface |
| 161 | Sprocket conical pulley |
| 161a | Protrusion |
| 162 | Grooved conical pulley |
| 162a | Groove |
| 163 | Perforated fan belt |
| 181 | Timing conical pulley |
| 181a | V shaped groove |
| 181b | Toothed protrusion |
| 182 | Conical pulley |
| 183 | Timing fan belt |
| 183a | V shaped protrusion |
| 183b | Depression |

## Claims

1. A nonparallel-axes transmission mechanism comprising:

   a plurality of pulleys;
   support shafts rotatably supporting the plurality of respective pulleys; and
   a transmission medium configured to, when power is input to one pulley among the plurality of pulleys, transmit the power from the one pulley to another pulley among the plurality of pulleys, the other pulley comprising a rotation axis not parallel to a rotation axis of the one pulley,
   wherein the transmission medium comprises a fan belt comprising a fan shape in a developed plan view,
   wherein the plurality of pulleys each comprise a conical pulley comprising a shape of an imaginary conical surface removing a shape of the fan belt in contact with the imaginary conical surface,
   wherein the conical pulley comprises a rotation axis identical to a center line of a cone formed by the imaginary conical surface, and

19

wherein among a plurality of conical pulleys of the plurality of pulleys, at least two conical pulleys comprise imaginary conical surfaces comprising matching apexes.

2. The nonparallel-axes transmission mechanism according to claim 1,
wherein at least two conical pulleys among the plurality of conical pulleys comprise imaginary conical surfaces in contact with one another with a contact line between the imaginary conical surfaces, and
wherein one surface of the fan belt is in contact with one conical pulley among the two contacting conical pulleys, and across the contact line, another surface of the fan belt opposite the one surface is in contact with another conical pulley among the two contacting conical pulleys.

3. The nonparallel-axes transmission mechanism according to claim 1, wherein the fan belt comprises a V belt comprising at least one protrusion comprising at least one of a V shaped cross-section and a trapezoidal cross-section, and the conical pulley comprises a groove corresponding to the at least one protrusion.

4. The nonparallel-axes transmission mechanism according to claim 3, wherein the at least one protrusion of the fan belt comprising at least one of a V shaped cross-section and a trapezoidal cross-section is asymmetrical such that an angle defined between a surface of the protrusion facing a center of the fan shape of the fan belt and a belt surface of the fan belt is smaller than an angle defined between a surface of the protrusion facing an outer circumference of the fan shape and the belt surface of the fan belt.

5. The nonparallel-axes transmission mechanism according to claim 1, wherein the fan belt comprises a timing belt comprising a plurality of tooth shaped protrusions aligned in a direction in which the fan belt proceeds, and the conical pulley comprises a timing pulley comprising grooves corresponding to the tooth shaped protrusions.

6. The nonparallel-axes transmission mechanism according to claim 5, wherein the tooth shaped protrusions of the timing belt of the fan belt each comprise a wedge shaped protrusion comprising an incremental width toward an outer circumference of the fan shape of the fan belt, and the conical pulley comprises grooves corresponding to wedge shaped protrusions.

7. The nonparallel-axes transmission mechanism according to claim 1 or 2, wherein the plurality of conical pulleys comprise a first conical pulley and a second conical pulley, and the fan belt comprises at least one both-end-secured belt comprising one end secured to the first conical pulley and another end secured to the second conical pulley.

8. The nonparallel-axes transmission mechanism according to claim 7,
wherein the plurality of conical pulleys comprise a conical pulley A and a conical pulley B abutting on the conical pulley A,
wherein the conical pulley A and the conical pulley B comprise imaginary conical surfaces in contact with one another with an imaginary conical contact line between the imaginary conical surfaces,
wherein the at least one both-end-secured belt comprises two both-end-secured belts, wherein one both-end-secured belt among the two both-end-secured belts is wound around the conical pulley A in a clockwise direction relative to an apex of the imaginary conical surface of the conical pulley A, and across the imaginary conical contact line, is wound around the conical pulley B in a counterclockwise direction relative to an apex of the imaginary conical surface of the conical pulley B, and
wherein another both-end-secured belt among the two both-end-secured belts is wound around the conical pulley A in a counterclockwise direction relative to the apex of the imaginary conical surface of the conical pulley A, and across the imaginary conical contact line, is wound around the conical pulley B in a clockwise direction relative to the apex of the imaginary conical surface of the conical pulley B.

9. The nonparallel-axes transmission mechanism according to claim 1, wherein the fan belt comprises a fan loop belt with both ends coupled to one another to form a loop.

10. The nonparallel-axes transmission mechanism according to claim 1 or 2, wherein the plurality of pulleys comprise n main conical pulleys, n being an integer equal to or more than two, and 2(n-1) guide conical pulleys, wherein the main conical pulleys and the guide conical pulleys comprise imaginary conical surfaces comprising matching apexes, wherein the main conical pulleys are coupled to each other to form a line, and two guide conical pulleys among the guide conical pulleys are disposed between two abutting main conical pulleys among the aligned main conical pulleys, and

wherein the fan loop belt comprises an inner surface in contact with the main conical pulleys and an outer surface in contact with the guide conical pulleys.

**11.** The nonparallel-axes transmission mechanism according to claim 1 or 2,
wherein the plurality of pulleys comprise
n main conical pulleys, n being an integer equal to or more than two, and 2n guide conical pulleys,
wherein the main conical pulleys and the guide conical pulleys comprise imaginary conical surfaces comprising matching apexes,
wherein the main conical pulleys are coupled to each other to form a loop, and two guide conical pulleys among the guide conical pulleys are disposed between two abutting main conical pulleys among the looped main conical pulleys, and
wherein the fan loop belt comprises an inner surface in contact with the main conical pulleys and an outer surface in contact with the guide conical pulleys.

**12.** The nonparallel-axes transmission mechanism according to claim 10,
wherein the plurality of pulleys comprise
two input conical pulleys,
n main conical pulley, n being an integer equal to or more than one, and 4n guide conical pulleys,
wherein the input conical pulleys, the main conical pulley, and the guide conical pulleys comprise imaginary conical surfaces comprising matching apexes,
wherein the two input conical pulleys comprise rotation axes aligned on a common line,
wherein the main conical pulley comprises a rotation axis orthogonal to the rotation axes of the input conical pulleys, and
wherein four guide conical pulleys among the guide conical pulleys are in contact with one main conical pulley among the main conical pulley, two of the four guide conical pulleys being in contact with one input conical pulley among the two input conical pulleys, another two of the four guide conical pulleys being in contact with another input conical pulley among the two input conical pulleys.

**13.** The nonparallel-axes transmission mechanism according to any one of claims 10 to 12,
wherein the main conical pulleys each comprise a timing pulley comprising a pitch of tooth grooves, and
wherein the imaginary conical surface of each of the guide conical pulleys comprises a truncated cone bottom radius that is set such that the fan belt forms a development center angle that is an integral multiple of the pitch of the tooth grooves of the main conical pulley.

**14.** The nonparallel-axes transmission mechanism according to claim 12, further comprising support frames, the support frames securing support shafts supporting the guide conical pulleys and securing support shafts supporting an output pulley,
wherein the support frames are rotatably supported about the rotation axes of the two input conical pulleys.

**15.** The nonparallel-axes transmission mechanism according to claim 1, further comprising:

at least one supporting member supporting the fan belt through sliding contact,
wherein the at least one supporting member comprises a conical supporting member comprising a shape of an imaginary conical surface removing a shape of the fan belt in contact with the imaginary conical surface,
wherein at least one conical pulley among the plurality of conical pulleys comprises an imaginary conical surface comprising an apex that matches an apex of the imaginary conical surface of the conical supporting member, the imaginary conical surface of the conical supporting member and the imaginary conical surface of the at least one conical pulley being in contact with one another with a contact line between the imaginary conical surface of the conical supporting member and the imaginary conical surface of the at least one conical pulley, and
wherein one surface of the fan belt is in contact with the at least one conical pulley, and across the contact line, another surface of the fan belt opposite the one surface is in contact with the conical supporting member.

**16.** The nonparallel-axes transmission mechanism according to claim 1, wherein the fan belt comprises a fan belt chain comprising links coupled to each other movably across the nonparallel rotation axes.

**17.** The nonparallel-axes transmission mechanism according to claim 1, wherein the fan belt comprises a steel belt.

**18.** The nonparallel-axes transmission mechanism according to claim 1,

wherein the fan belt comprises a holed fan belt comprising a hole, and
wherein the plurality of conical pulleys each comprise a sprocket conical pulley comprising a protrusion configured to engage with the hole.

19. The nonparallel-axes transmission mechanism according to claim 18, wherein at least one conical pulley among the plurality of conical pulleys abuts on the sprocket conical pulley and comprises a grooved conical pulley comprising a groove at a portion of the grooved conical pulley where the protrusion of the sprocket conical pulley penetrates through the hole of the fan belt.

20. The nonparallel-axes transmission mechanism according to claim 1, wherein the fan belt comprises a timing fan belt comprising at least one V shaped protrusion comprising at least one of a V shaped cross-section and a trapezoidal cross-section, the V shaped protrusion comprising a plurality of depressions, the plurality of conical pulleys each comprising a V shaped groove configured to engage with the V shaped protrusion and comprising a plurality of tooth shaped protrusions configured to engage with the plurality of respective depressions.

21. The nonparallel-axes transmission mechanism according to claim 20, wherein the timing fan belt comprises a steel belt and an elastic material pasted on the steel belt.

22. A robot comprising:

    a plurality of arms; and
    a joint pivotably or rotatably coupling the plurality of arms to each other,
    wherein the joint comprises the nonparallel-axes transmission mechanism according to claim 1.

# FIG. 1A

# FIG. 1B

# FIG. 1C

EP 2 492 545 A1

# FIG. 2

24

# FIG. 3A

# FIG. 3B

# FIG. 4

# FIG. 5

EP 2 492 545 A1

# FIG. 6

EP 2 492 545 A1

EP 2 492 545 A1

**FIG. 7A**

**FIG. 7B**

**FIG. 7C**

**FIG. 7D**

28

# FIG. 8

# FIG. 9

EP 2 492 545 A1

# FIG. 10A

# FIG. 10B

# FIG. 10C

# FIG. 11

# FIG. 12

100

# FIG. 13

80

81

FIG. 15

FIG. 14

# FIG. 16

# FIG. 17

# FIG. 18

# FIG. 19

| | |
|---|---|
| **INTERNATIONAL SEARCH REPORT** | International application No.<br>PCT/JP2010/068138 |

**A. CLASSIFICATION OF SUBJECT MATTER**
*F16H19/00*(2006.01)i, *B25J17/00*(2006.01)i, *F16G1/28*(2006.01)i, *F16G5/20*
(2006.01)i, *F16H7/02*(2006.01)i, *F16H7/06*(2006.01)i

According to International Patent Classification (IPC) or to both national classification and IPC

**B. FIELDS SEARCHED**

Minimum documentation searched (classification system followed by classification symbols)
F16H19/00, B25J17/00, F16G1/28, F16G5/20, F16H7/02, F16H7/06

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | GB 2330007 A (MATRA MARCONI SPACE UK LTD.),<br>07 April 1999 (07.04.1999),<br>page 4, line 19 to page 6, line 12; fig. 3 to 6<br>(Family: none) | 1,2,7,8,17,<br>22<br>3,5,6,18 |
| Y | JP 2003-14054 A (Mitsuboshi Belting Ltd.),<br>15 January 2003 (15.01.2003),<br>fig. 1<br>(Family: none) | 3,22 |
| Y | JP 46-22101 B1 (Pirelli S.p.A.),<br>23 June 1971 (23.06.1971),<br>fig. 1, 2<br>(Family: none) | 5,6,22 |

☒ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>28 December, 2010 (28.12.10) | Date of mailing of the international search report<br>11 January, 2011 (11.01.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/068138

C (Continuation).   DOCUMENTS CONSIDERED TO BE RELEVANT

| Category* | Citation of document, with indication, where appropriate, of the relevant passages | Relevant to claim No. |
|---|---|---|
| X | JP 47-49750 B1  (Kabushiki Kaisha Nakagoshi Kikai Seisakusho), 14 December 1972 (14.12.1972), column 1, line 30 to column 2, line 30; fig. 1 to 3 (Family: none) | 9 |
| Y | JP 2002-123129 A  (Fuji Xerox Co., Ltd.), 26 April 2002 (26.04.2002), paragraphs [0071] to [0074]; fig. 7, 8 (Family: none) | 18,22 |
| A | JP 3-505067 A  (Massachusetts Institute of Technology), 07 November 1991 (07.11.1991), fig. 7, 8 & US 4903536 A          & US 5046375 A & US 5207114 A          & WO 1989/010242 A1 | 1-22 |
| A | US 2854854 A  (SPERRY RAND CORP.), 07 October 1958 (07.10.1958), fig. 1, 2 (Family: none) | 1-22 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 3505067 A

**Non-patent literature cited in the description**

• **ITO, SHIGERU.** Dictionary of Mechanisms. Rikogakusha Publishing Co., Ltd, 10 May 1983, 108-112